# EUROPEAN PATENT APPLICATION

(11) **EP 0 860 307 A2**
(43) Date of publication of application: **26.08.1998**
(21) Application number: 98102557.0
(22) Date of filing: 13.02.1998
(51) Int. Cl.: B60H 1/00, B60H 1/32, F25B 9/00

(54) **Vehicle refrigeration cycle**

(30) Priority: 24.02.1997 JP 54272/97
(71) Applicant: ZEXEL CORPORATION, Tokyo (JP)
(72) Inventor: Kanai, Hiroshi, c/o Zexel Corporation, Higashi-Matsuyama City, Saitama Pref. (JP); Furuya, Shunichi, c/o Zexel Corporation, Higashi-Matsuyama City, Saitama Pref. (JP)
(74) Representative: Grünecker, Kinkeldey, Stockmair & Schwanhäusser Anwaltssozietät

(57) **Abstract**

A purpose of the present invention is to provide a vehicle refrigeration cycle that makes it possible both to maintain safety under high temperature and during cycle stoppage, and to effectively utilize coolant inside the vapor-liquid separator, particularly when using carbon dioxide gas as the coolant.

The present invention reflects the fact that attention has been given to the place in a vehicle refrigeration cycle where the vapor-liquid separator is positioned. The present invention comprises a compressor 2 and a condenser 3 positioned on the engine compartment 10 side of the vehicle, and an evaporator 4 positioned on the vehicle cabin 11 side thereof, and a vapor-liquid separator, the vapor-liquid separator 5 being positioned on the vehicle cabin 11 side.

## Description

### BACKGROUND OF THE INVENTION

### 1. Field of the Invention

The present invention concerns a vehicle refrigeration cycle, and particularly a vehicle refrigeration cycle in which safety during cycle stoppage is taken into consideration.

### 2. Description of the Related Art

In general, in a thermo-compression type refrigeration cycle for use in vehicles, a vapor-liquid separator temporarily stores gaseous-state and liquid-state coolant circulating in the cycle and separates the vapor and liquid, and makes it possible to supply gaseous-state coolant to a compressor. In general, this vapor-liquid separator is placed inside the engine compartment together with a compressor downstream therefrom.

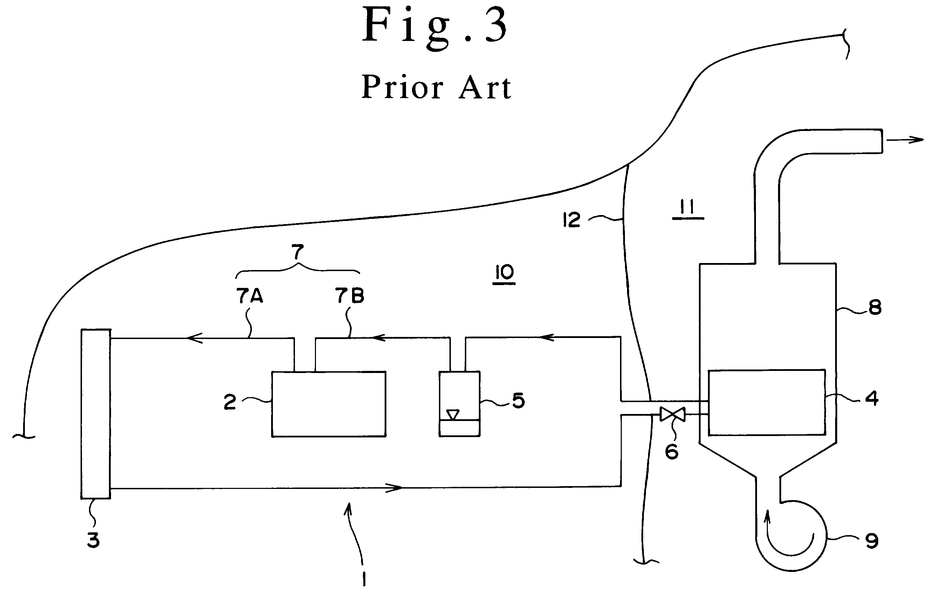

A general description is now given with reference to Fig. 3. Fig. 3 is a simplified explanatory diagram for a conventional vehicle refrigeration cycle 1. The vehicle refrigeration cycle 1, employing carbon dioxide gas, for example, as the coolant, comprises a compressor 2, a condenser 3, an evaporator 4, a vapor-liquid separator 5, an expansion valve 6, a cycle pipeline 7 (high-pressure pipeline 7A and low-pressure pipeline 7B) that connects these, an evaporator housing 8, and an air fan 9.

The compressor 2 and condenser 3 are placed inside an engine compartment 10. The engine compartment 10 and vehicle cabin 11 are compartmentalized by a barrier wall 12.

The evaporator 4 is placed inside the evaporator housing 8 in the vehicle cabin 11.

The vapor-liquid separator 5 is connected, by the low-pressure pipeline 7B, between the evaporator 4 and the compressor 2, and is placed inside the engine compartment 10 upstream of the compressor 2.

In a vehicle refrigeration cycle 1 configured in this manner, the engine compartment 10 reaches very high temperatures (such as 120°C), whereupon the coolant pressure reaches high pressures, according to the coolant volume.

That being so, when the vapor-liquid separator 5 having a comparatively large capacity is under high temperature, it is necessary to employ high-pressure-resistant material in the high-pressure pipeline 7A and low-pressure pipeline 7B in each area, which constitutes a problem.

In particular, when carbon dioxide gas is used as the coolant, the critical point thereof is exceeded, wherefore a high-pressure cycle is reached, compared to Freon or other coolants, making it particularly necessary to be careful when stopping the cycle.

When the vapor-liquid separator 5 is under high temperature, moreover, the vapor-liquid separator 5 itself functions as a heat exchanger, so that the coolant temperature at the intake to the compressor 2 becomes elevated. This increases the specific volume, causing problems of performance degradation in the compressor 2 and even in the vehicle refrigeration cycle 1 overall.

### SUMMARY OF THE INVENTION

With the foregoing in view, it is an object of the present invention to provide a vehicle refrigeration cycle that is definitely safe, particularly under high temperatures or during cycle stoppage.

Another object of the present invention is to provide a vehicle refrigeration cycle that makes possible the effective utilization of the coolant in the vapor-liquid separator.

Another object of the present invention is to provide a vehicle refrigeration cycle that is definitely safe and that makes possible the effective utilization of the coolant under high temperature or during cycle stoppage, in cases where carbon dioxide gas is used as the coolant.

The present invention, more specifically, reflecting the fact that attention has been given to the place in a vehicle refrigeration cycle where the vapor-liquid separator is positioned, is a vehicle refrigeration cycle comprising: a compressor and condenser placed on the engine compartment side of the vehicle; and an evaporator placed on the vehicle cabin side and vapor-liquid separator; wherein the vapor-liquid separator is placed on the vehicle cabin side.

The vapor-liquid separator is capable of heat-exchange together with the evaporator, by receiving an air flow from an air fan, etc.

The vapor-liquid separator can be made integrally with the evaporator.

The present invention is particularly suitable for cases where carbon dioxide gas is used as the coolant, but it can be applied to any coolant.

Any positioning configuration can be adopted for the vapor-liquid separator and evaporator, moreover, such as parallel or series, etc.

In the vehicle refrigeration cycle according to the present invention, the vapor-liquid separator is placed, just as is the evaporator, inside the vehicle cabin, on the low-temperature side from the engine compartment. Because of this, the degree to which the vapor-liquid separator is raised to high temperature and high pressure by the operation of the engine and the refrigeration cycle can be moderated, and safety can be secured.

Furthermore, because the vapor-liquid separator itself contains coolant in the vapor and liquid states, it can perform a heat-exchanging function, not on the engine-compartment side but inside the vehicle cabin, receiving a flow of air from an air fan, by being placed in the evaporator housing inside the vehicle cabin together with the evaporator. It can therefore avoid the ill effects on the compressor noted above, and perform effective coolant utilization while performing an auxiliary evaporator function.

### BRIEF DESCRIPTION OF THE DRAWINGS

Fig. 1 is a simplified explanatory diagram of the major components in a vehicle refrigeration cycle 20 according to a first embodiment of the present invention;
Fig. 2 is a simplified explanatory diagram of the major components in a vehicle refrigeration cycle 30 according to a second embodiment of the present invention; and
Fig. 3 is a simplified explanatory diagram of a conventional vehicle refrigeration cycle 1.

### DESCRIPTION OF THE PREFERRED EMBODIMENTS

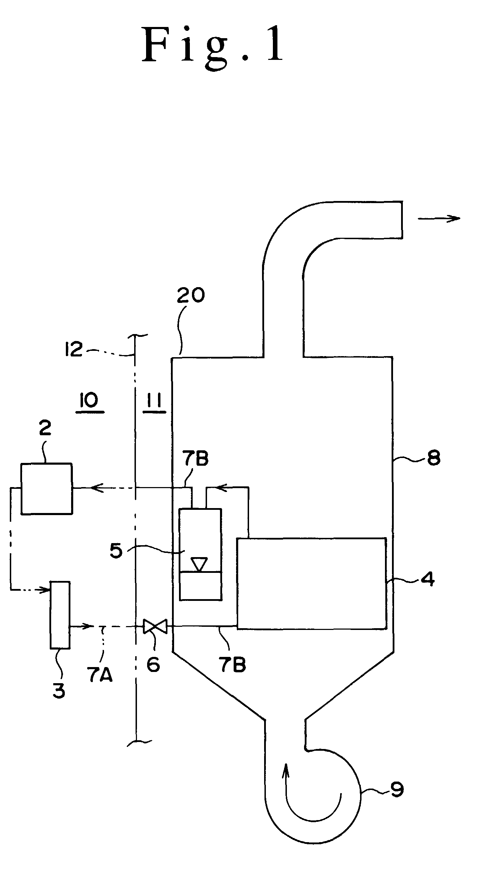

Next is described a vehicle refrigeration cycle 20 that is based on a first embodiment of the present invention, with reference to Fig. 1. Where the components are the same as in Fig. 3, the same symbol is used to designate them, and any detailed description thereof is omitted.

Fig. 1 is a simplified explanatory diagram of the major components in the vehicle refrigeration cycle 20. The vapor-liquid separator 5 in this vehicle refrigeration cycle 20 is positioned inside the vehicle cabin 11.

More specifically, as depicted in the figure, the vapor-liquid separator 5, together with the evaporator 4, is placed inside the evaporator housing 8 so that it receives a flow of air from the air fan 9.

In particular, the evaporator 4 and vapor-liquid separator 5 are arranged so as to be mutually in parallel relative to the flow of air from the air fan 9.

It is also possible to dispose the evaporator 4 and vapor-liquid separator 5 in a parallel condition with the two integrated.

In a vehicle refrigeration cycle 20 configured in this way, the vapor-liquid separator 5, together with the evaporator 4, is positioned inside the evaporator housing 8 in the vehicle cabin 11, and the vehicle cabin 11 is at a lower temperature than the engine compartment 10. Therefore the vapor-liquid separator 5 is not exposed to high temperatures by the operation either of the engine or the compressor 2, so that the degree to which the internal coolant is put under high pressure can be suppressed, and safety can be maintained.

Furthermore, when the outside air temperature is high, the pressure inside the vapor-liquid separator 5 does not rise, even if the vehicle refrigeration cycle 20 is stopped, making it safe.

Because high-pressurization of the vapor-liquid separator 5 is avoided, moreover, it is possible to prevent the coolant temperature at the intake of the compressor 2 from rising, and, thus, to prevent the performance thereof from deteriorating. In addition, it is possible to have the internal coolant perform a heat-exchange with the air coming from the air fan 9, so that the coolant can be effectively used to improve actual refrigeration performance.

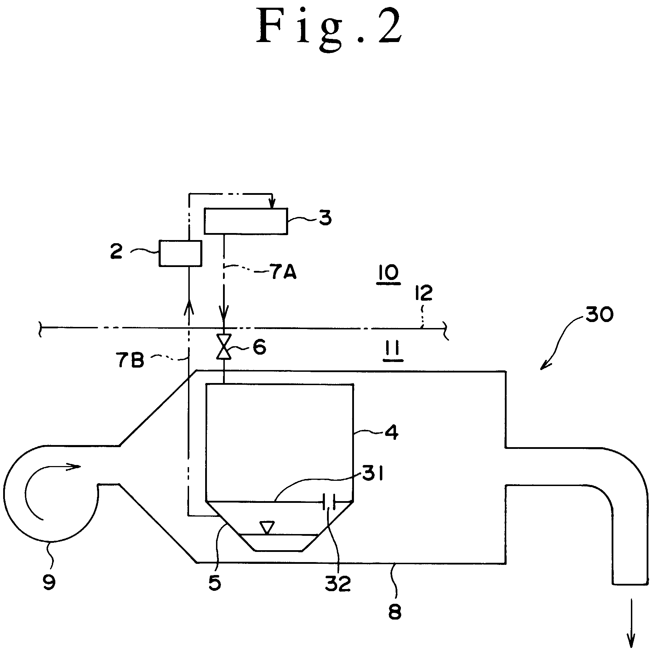

Fig. 2 is a simplified explanatory diagram of the major components in a vehicle refrigeration cycle 30 that is according to a second embodiment of the present invention. In this vehicle refrigeration cycle 30, the vapor-liquid separator 5 and the evaporator 4 are formed integrally, with a barrier wall 31 provided between them, and disposed in parallel relative to the flow of air from the air fan 9.

Communicating holes 32 are provided in the barrier wall 31, however, so that coolant can move from the evaporator 4 to the vapor-liquid separator 5.

The evaporator 4 and the vapor-liquid separator 5 may also be disposed in series relative to the flow of air, each being left as a discrete entity, and connected via the low-pressure pipeline 7B.

In the vehicle refrigeration cycle 30 configured in this manner, the vapor-liquid separator 5, just as the evaporator 4, is inside the evaporator housing 8 in the vehicle cabin 11, as in the vehicle refrigeration cycle 20 (Fig. 1) described above. It is therefore possible to suppress the high-pressurization of the vapor-liquid separator 5, even when the vehicle refrigeration cycle 30 is stopped while at high temperature. Hence safety can be secured, and the heat-exchange function of the vapor-liquid separator 5 can be exploited to facilitate efficient utilization.

Furthermore, because the evaporator 4 and the vapor-liquid separator 5 are integrated, the space inside the evaporator housing 8 can be used effectively.

Hence, as based on the present invention, by locating the vapor-liquid separator on the vehicle cabin side instead of on the engine compartment side, it is possible to protect the vapor-liquid separator, which, in general, readily attains high temperatures and high pressures, to manifest the heat-exchange function thereof together with the evaporator, and to effectively utilize the coolant.

### Reference Terms

- 1: vehicle refrigeration cycle (Fig. 3)
- 2: compressor
- 3: condenser
- 4: evaporator
- 5: vapor-liquid separator
- 6: expansion valve
- 7: cycle pipeline
- 7A: high-pressure pipeline of cycle pipeline
- 7A: low-pressure pipeline of cycle pipeline
- 8: evaporator housing
- 9: air fan
- 10: engine compartment
- 11: vehicle cabin
- 12: barrier wall
- 20: vehicle refrigeration cycle (first embodiment, Fig. 1)
- 30: vehicle refrigeration cycle (second embodiment, Fig. 2)
- 31: barrier wall
- 32: communicating holes in barrier wall 31

## Claims

1. A vehicle refrigeration cycle comprising:
a compressor 2 and condenser 3, placed on the engine compartment 10 side of the vehicle; and
an evaporator 4 placed on the vehicle cabin 11 side and vapor-liquid separator 5; wherein said vapor-liquid separator 5 is placed on said vehicle cabin 11 side. (Fig. 1, 2)

2. The vehicle refrigeration cycle according to Claim 1, wherein carbon dioxide gas is used as the coolant. (Fig. 1, 2)

3. The vehicle refrigeration cycle according to Claim 1, wherein said vapor-liquid separator 5 is made capable of heat-exchange together with said evaporator 4. (Fig. 1, 2)

4. The vehicle refrigeration cycle according to Claim 1, wherein said vapor-liquid separator 5 is made capable of heat-exchange together with said evaporator 4, by receiving a flow of air from an air fan 9 provided in an evaporator housing 8 for said evaporator 4. (Fig. 1, 2)

5. The vehicle refrigeration cycle according to Claim 1, wherein said vapor-liquid separator 5 is made integrally with said evaporator 4. (Fig. 2)

6. The vehicle refrigeration cycle according to Claim 1, wherein: said vapor-liquid separator 5 is formed integrally with said evaporator 4, a barrier wall 31 being provided between it and said evaporator 4; and communicating holes 32 are provided in said barrier wall 31, so that coolant can move from said evaporator 4 to said vapor-liquid separator 5. (Fig. 2)
